# EUROPEAN PATENT SPECIFICATION

(11) **EP 4 129 089 B1**
(45) Date of publication and mention of the grant of the patent: **01.10.2025**
(21) Application number: 21806127.3
(22) Date of filing: 23.07.2021
(51) Int. Cl.: A23B 2/93, A23P 10/40, A23L 25/00, A23J 3/14, A23P 10/22, A23L 5/30

(54) **PREPARATION METHOD FOR PICKERING GRANULAR DRY POWDER**
VERFAHRLEN ZUR HERSTELLUNG VON TROCKENPULVER MIT PICKERING-PARTIKELN
PROCÉDÉ DE PRÉPARATION DE POUDRE SÈCHE GRANULAIRE DE PICKERING

(30) Priority: 24.06.2021 CN 202110704219
(43) Date of publication of application: 08.02.2023
(73) Proprietor: Institute of Food Science and Technology, Chinese Academy of Agricultural Sciences, 100193 Beijing (CN)
(72) Inventor: WANG, Qiang, 100193 Beijing (CN); SHI, Aimin, 100193 Beijing (CN); GE, Yanzheng, 100193 Beijing (CN); JIAO, Bo, 100193 Beijing (CN); LIU, Hongzhi, 100193 Beijing (CN); LIU, Li, 100193 Beijing (CN); HU, Hui, 100193 Beijing (CN); MENG, Shi, 100193 Beijing (CN); GUO, Qin, 100193 Beijing (CN); ZHANG, Jinchuang, 100193 Beijing (CN)
(74) Representative: Boncea, Oana-Laura
(86) International application number: PCT/CN2021/108119
(87) International publication number: WO 2022/267156

(56) References cited:
- WO-A1-2019/008147
- WO-A2-01/65948
- CN-A- 102 934 731
- CN-A- 102 934 731
- CN-A- 107 455 550
- CN-A- 111 280 293
- CN-A- 111 280 293
- CN-A- 112 042 928
- US-A1- 2020 170 279
- BO JIAO ET AL: "High-Internal-Phase Pickering Emulsions Stabilized Solely by Peanut-Protein-Isolate Microgel Particles with Multiple Potential Applications", ANGEWANDTE CHEMIE, WILEY - V C H VERLAG GMBH & CO. KGAA, DE, vol. 130, no. 30, 3 July 2018 (2018-07-03), pages 9418 - 9422, XP071375799, ISSN: 0044-8249, DOI: 10.1002/ANGE.201801350
- NING FANGJIAN ET AL: "Double-induced se-enriched peanut protein nanoparticles preparation, characterization and stabilized food-grade pickering emulsions", FOOD HYDROCOLLOIDS, ELSEVIER BV, NL, vol. 99, 13 August 2019 (2019-08-13), XP085880638, ISSN: 0268-005X, [retrieved on 20190813], DOI: 10.1016/J.FOODHYD.2019.105308
- BURGOS-DÍAZ CÉSAR ET AL: "Food-grade Pickering emulsion as a novel astaxanthin encapsulation system for making powder-based products: Evaluation of astaxanthin stability during processing, storage, and its bioaccessibility", FOOD RESEARCH INTERNATIONAL, ELSEVIER, AMSTERDAM, NL, vol. 134, 16 April 2020 (2020-04-16), XP086168778, ISSN: 0963-9969, [retrieved on 20200416], DOI: 10.1016/J.FOODRES.2020.109244
- BENETTI JOÃO VITOR MUNARI ET AL: "SPI microgels applied to Pickering stabilization of O/W emulsions by ultrasound and high-pressure homogenization: rheology and spray drying", FOOD RESEARCH INTERNATIONAL, vol. 122, August 2019 (2019-08-01), pages 383 - 391, XP085714085, ISSN: 0963-9969, DOI: 10.1016/J.FOODRES.2019.04.020

## Description

### Technical Field

The present invention relates to the food processing field, in particular, a method for preparing a pickering particle dry powder.

### Background Art

Food grade Pickering emulsion is an emulsion prepared mainly by relying on the stabilization of edible solid particles such as protein and polysaccharides on the oil-water interface. In recent years, Pickering emulsion has been widely concerned in food processing, medicine and other fields because of its strong stability, low production cost and little harm to human body. Bo Jiao et al (2018) discloses a peanut protein isolate microgel particles prepared by transglutaminase enzyme crosslinking, crushing and drying the microgel particles.

CN111280293A discloses a preparation method of protein foaming agent comprising stirring rice bran protein with water, adding transglutaminase, shearing and spray drying to prepare micro-granulated dry rice bran protein powder.

CN102934731A discloses a method for preparing high gelation soybean protein, wherein the method comprises subjecting a 5% soybean protein isolate dispersion to ultrasonic treatment and enzyme cross-linking, using e.g. transglutaminase, followed by freeze drying.

US2020/170279A1 teaches a method for preparing a Pickering emulsion using peanut protein isolate.

WO2019/008147A1 teaches subjecting a peanut protein isolate dispersion to ultrasonic treatment.

At present, Pickering particles are stored in liquid state, and their stability decreases with the extension of storage time, which leads to short shelf life and limits their application in food industry. Dehydration of Pickering particle liquid can effectively prolong the shelf life and facilitate transportation and storage, but it is difficult to keep its original Pickering function after drying and rehydration. Therefore, it is urgent to solve the problem of how to keep the original Pickering function after drying and rehydration of Pickering particles.

In view of this, the present invention is proposed.

### Summary of the Invention

One object of the present invention is to provide a preparation method of the Pickering particle dry powder, and the Pickering particle dry powder prepared by the method can still maintain nanometer level after rehydration, which is beneficial to the preparation of Pickering emulsion with strong stability.

Specifically, the invention provides the following technical solutions:
The invention provides a preparation method of a Pickering particle dry powder, which comprises the following steps:
(1) stirring peanut protein isolate and water as raw materials to obtain peanut protein isolate dispersion;
(2) subjecting the peanut protein isolate dispersion to ultrasonic treatment, wherein pH value of the peanut protein isolate dispersion is adjusted to 6.3 to 8.1 in advance before the ultrasonic treatment of the peanut protein isolate dispersion; and the ultrasonic treatment is performed at 100 to 500 W for 10 to 40 min, and then subjecting the resultant to cross-linking reaction with transglutaminase to obtain a monolithic gel;
(3) shearing and homogenizing the monolithic gel to obtain a microgel particle dispersion;
(4) spray drying the microgel particle dispersion to obtain the Pickering particle dry powder.

In the prior art, a peanut protein isolate is a kind of plant protein with abundant sources, low price, high quality and complete nutrition. It also has many functional properties such as good emulsifying property, gelling property, foaming property and water-holding capacity, and has the potential to be developed into a stabilizer for Pickering emulsion. Ultrasonic treatment is a typical physical modification method, with uniform treatment effect, which can induce the molecular structure of protein to change, change the interaction between protein molecules, enhance the adsorption capacity of protein at the oil-water interface, and improve the emulsifying property of protein.

The present invention has unexpectedly found that the Pickering particle dry powder can be obtained by pretreating peanut protein isolate by ultrasonic, performing an enzyme cross-linking reaction, obtaining a microgel particle dispersion by high-speed shearing and high-pressure homogenization, and subsequently performing spray drying. The Pickering particle dry powder can be used as a stabilizer for Pickering emulsion.

In order to further improve the performance of Pickering particle dry powder after rehydration, the present invention optimizes its preparation method, which is specifically as follows:
Preferably, in step (1), the mass concentration of the peanut protein isolate dispersion is 5 to 30%.

Preferably, in step (1), the stirring is performed at 200 to 1250 rpm for 0.5 to 4 h.

Preferably, the step (1) further comprises a hydration reaction step after the stirring; the hydration reaction is performed at 3 to 5°C for 0 to 18 h.

Further, the hydration reaction is performed at 3 to 5°C for 1 to 18 h.

Further, in step (1), peanut protein isolate and water are mixed, stirred at room temperature at 200 to 1250 rpm for 0.5 to 4 h, and then placed in a cold storage environment (i.e., at 3 to 5°C) for hydration reaction for 1 to 18 h;

Here, the "room temperature" refers to 25°C.

In step (2), the pH value of the peanut protein isolate dispersion is adjusted to 6.3 to 8.1 in advance before the ultrasonic treatment of the peanut protein isolate dispersion. The adjustment of the pH value of peanut protein isolate dispersion in advance is conducive to providing a milder environment, which is convenient for transglutaminase to keep high activity in the subsequent cross-linking reaction.

In step (2), the ultrasonic treatment is performed at 100 to 500 W for 10 to 40 min. Ultrasonic treatment under the above conditions can further enhance the adsorption capacity of protein at the oil-water interface, thereby further improving the emulsification of protein.

Preferably, in step (2), the addition amount of the transglutaminase is 10 to 50 U/g based on the mass of the peanut protein isolate. The addition of the transglutaminase in the above amount is beneficial to the rapid crosslinking of protein, thereby giving a monolithic gel.

Preferably, in step (2), the crosslinking reaction is performed at 40 to 65°C. for 1 to 4 hours.

Preferably, in step (3), the shearing is performed at 6,000 to 12,000 rpm for 30 to 120 s;

Preferably, in step (3), the homogenization is performed at 500 to 1,200 bar for 2 to 5 min.

In the invention, high-speed shearing and high-pressure homogenization are carried out under the above specific conditions, which is beneficial to obtaining fine particles with regular shape and uniform distribution.

Preferably, in step (3), the homogenization is carried out under the action of a protective agent; specifically, a protective agent is added into the crude dispersion of microgel particles obtained by shearing, and then homogenized;

Further, the protective agent is selected from one or more of maltodextrin, lactose and mannitol;

Furthermore, the addition amount of the protective agent is 0.5 to 10% based on the mass of the peanut protein isolate.

Preferably, in step (3), the mass concentration of the microgel particle dispersion is 3 to 15%. The mass concentration of the microgel particle dispersion can be adjusted and controlled by adding water in weight of 0 to 2 times of the monolithic gel.

Preferably, in step (4), the inlet temperature of the spray drying is 135 to 225°C, the injection amount is 4 to 50 ml/min, and the fan delivery is 25 to 35 m³/h. Spray drying under the above conditions can obtain Pickering particle dry powder which is not easy to agglomerate, uniform in color, good in microstructure and excellent in performance, and has a high powder yield.

As a preferable technical solution, the preparation method comprises the following steps:
(1) mixing peanut protein isolate with water, stirring at room temperature at 200 to 1,250 rpm for 0.5 to 4 h, and hydrating at 3 to 5°C for 1 to 18 h to obtain peanut protein isolate dispersion with a mass concentration of 5 to 30%;
(2) adjusting a pH value of the peanut protein isolate dispersion to 6.3 to 8.1, performing ultrasonic treatment at 100 to 500 W for 10 to 40 min, adding transglutaminase, and performing cross-linking reaction at 40 to 65°C for 1 to 4 h to obtain a monolithic gel;
(3) shearing the monolithic gel at 6,000 to 12,000 rpm for 30 to 120 s to obtain a crude microgel particle dispersion; adding a protective agent into the crude microgel particle dispersion, and homogenizing at 500 to 1,200 bar for 2 to 5 min to obtain a microgel particle dispersion;
   the protective agent is selected from one or more of maltodextrin, lactose and mannitol; and
(4) spray drying the microgel particle dispersion to obtain Pickering particle dry powder.

In the invention, the prepared Pickering particle dry powder is stored in a dryer.

Disclosed herein but not as such part of the present invention is a Pickering particle dry powder, and the Pickering particle dry powder is prepared by the above method.

The present invention has the advantageous effects as follows:
(1) Pickering particle dry powder prepared by ultrasonic-assisted enzyme method is still in nanometer level after rehydration, which is beneficial to preparing Pickering emulsion with strong stability; and
(2) the preparation method provided by the invention has simple operation and low cost, which is beneficial to the actual production in the food industry.

### Detailed description of the invention

The following Examples are intended to illustrate the present invention, but are not intended to limit the scope of the present invention.

If the specific technology or conditions are not indicated in the Examples, it shall be carried out according to the technology or conditions described in the literature in the art, or according to the product instruction. The reagents or instruments used that do not indicate the manufacturer are all conventional products that can be purchased through formal channels.

### Example 1

The present Example provides a Pickering particle dry powder, and the preparation method thereof comprises the following steps:
(1) peanut protein isolate was mixed with water, stirred at room temperature (25°C) at 300 rpm for 2 h, and then hydrated at 4°C for 4 h, so that protein was fully hydrated, and peanut protein isolate dispersion with a mass concentration of 10% was obtained;
(2) the pH value of the peanut protein isolate dispersion was adjusted to 7.0, and the resultant peanut protein isolate dispersion was ultrasonically treated at 300 W for 40 min, then, added with 30 U/g of transglutaminase (based on the mass of the peanut protein isolate), and cross-linking reaction was carried out at 55°C (heated in water bath) for 2 h to obtain a monolithic gel;
(3) the monolithic gel was added with water in mass of 1 time of the monolithic gel, and sheared using a high-speed disperser at 6,000 rpm for 30 s to obtain a crude microgel particles dispersion; the crude microgel particle dispersion was added with 1% of maltodextrin (based on the mass of peanut protein isolate), stirred uniformly, and homogenized using a high pressure homogenizer uner a high pressure of 500 bar for 3 min to obtain microgel particle dispersion; and
(4) the microgel particle dispersion was spray dried to obtain a Pickering particle dry powder, and the resultant Pickering particle dry powder was stored in a dryer;
wherein, the inlet temperature of spray drying was 135°C, the injection amount was 8 ml/min, and the fan delivery was 35 m³/h.

The properties of Pickering particle dry powder before and after rehydration in the present Example were shown in Table 1.

**Table 1**

| Test sample | Particle size (nm) | Zeta potential (mV) |
|---|---|---|
| Pickering particle dry powder | 439.8±1.41 | -36.3±0.32 |
| Rehydrated Pickering particle dry powder | 634.6±0.75 | -35.5±0.23 |

### Example 2

The present Example provides a Pickering particle dry powder, and the preparation method thereof comprises the following steps:
(1) mixing the peanut protein isolate with water, stirring at room temperature (25°C) at 325 rpm for 1 h, and then hydrating at 4°C for 12 h, so as to fully hydrate the protein and obtain peanut protein isolate dispersion with a mass concentration of 15%;
(2) the pH value of the peanut protein isolate dispersion was adjusted to 7.2, the resultant peanut protein isolate dispersion was ultrasonically treated at 400 W for 30 min, then added with 25 U/g (based on the mass of the peanut protein isolate) of transglutaminase, and crosslinking reaction was carried out at 50°C (heated in water bath) for 1 h to obtain a monolithic gel;
(3) the monolithic gel was added with water in mass of 2 times of the monolithic gel, and sheared using a high-speed disperser at 11,000 rpm for 60 s to obtain a crude microgel particles dispersion; the crude microgel particle dispersion was added with 3% of maltodextrin (based on the mass of the peanut protein isolate), stirred uniformly, and homogenized using a high pressure homogenizer under a high pressure of 900 bar for 3 min to obtain a microgel particle dispersion; and
(4) the microgel particle dispersion was spray dried to obtain a Pickering particle dry powder, and the resultant Pickering particle dry powder was stored in a dryer;

Wherein, the inlet temperature of spray drying was 155°C, the injection amount was 12 ml/min, and the fan delivery was 35 m³/h.

The properties of Pickering particle dry powder before and after rehydration in the present Example were shown in Table 2.

**Table 2**

| Test sample | Particle size (nm) | Zeta potential (mV) |
|---|---|---|
| Pickeringparticle | 289.8±2.21 | -36.9±0.26 |
| Rehydrated Pickering particle dry powder | 435.6±1.35 | -35.6±0.23 |

Although the general description, specific embodiments and experiments have been used to describe the present invention in detail above, it is obvious to a person skilled in the art that some modifications or improvements can be made on the basis of the present invention. Therefore, all these modifications or improvements are made without departing from the scope of the present invention.

Exemplary embodiments of the present invention are provided in the above Examples. The Examples are only given by way of example and are used to help a person skilled in the art to apply the present invention. The described Examples are not intended to limit the scope of the present invention in any way.

### Industrial applicability

The invention provides a preparation method for a Pickering particle dry powder. The preparation method comprises the following steps: (1) stirring peanut protein isolate and water as raw materials to obtain peanut protein isolate dispersion; (2) subjecting the peanut protein isolate dispersion to ultrasonic treatment, wherein pH value of the peanut protein isolate dispersion is adjusted to 6.3 to 8.1 in advance before the ultrasonic treatment of the peanut protein isolate dispersion; and the ultrasonic treatment is performed at 100 to 500 W for 10 to 40 min, and then subjecting the resultant to cross-linking reaction with transglutaminase to obtain a monolithic gel; (3) shearing and homogenizing the monolithic gel to obtain a microgel particle dispersion; (4) spray drying the microgel particle dispersion to obtain the Pickering particle dry powder. The Pickering particle dry powder prepared by the ultrasonic-assisted enzyme method according to the present invention is still in nanometer level after rehydration, which is conducive to preparing Pickering emulsion with strong stability; the preparation method provided by the invention is simple in operation and low in cost, which is beneficial to actual production in the food industry, and has good economic value and application prospects.

## Claims

1. A preparation method of a Pickering particle dry powder, comprising the following steps:
(1) stirring peanut protein isolate and water as raw materials to obtain peanut protein isolate dispersion;
(2) subjecting the peanut protein isolate dispersion to ultrasonic treatment, wherein pH value of the peanut protein isolate dispersion is adjusted to 6.3 to 8.1 in advance before the ultrasonic treatment of the peanut protein isolate dispersion; and the ultrasonic treatment is performed at 100 to 500 W for 10 to 40 min, and then subjecting the resultant to cross-linking reaction with transglutaminase to obtain a monolithic gel;
(3) shearing and homogenizing the monolithic gel to obtain microgel particle dispersion; and
(4) spray drying the microgel particle dispersion to obtain the Pickering particle dry powder.

2. The preparation method according to claim 1, wherein in step (1), a mass concentration of the peanut protein isolate dispersion is 5% to 30%; and/or
the stirring is carried out at 200 to 1,250 rpm for 0.5 to 4 h; and
after the stirring, further comprising a hydration reaction step; the hydration reaction is performed at 3 to 5°C for 0 to 18 h.

3. The preparation method according to any one of claims 1 to 2, wherein in step (2), the addition amount of transglutaminase is 10 to 50 U/g based on the mass of the peanut protein isolate; and
the crosslinking reaction is performed at 40 to 65°C for 1 to 4 h.

4. The preparation method according to any one of claims 1 to 3, wherein in step (3), the shearing is performed at 6,000 to 12,000 rpm for 30 to 120 s; and
the homogenization is performed at 500 to 1,200 bar for 2 to 5 min.

5. The preparation method according to any one of claims 1 to 4, wherein in step (3), the homogenization is performed under the action of a protective agent; specifically, the protective agent is added into a crude dispersion of microgel particles obtained by shearing, and then the resultant is homogenized;
preferably, the protective agent is selected from one or more of maltodextrin, lactose and mannitol;
more preferably, the addition amount of the protective agent is 0.5 to 10% based on the mass of the peanut protein isolate.

6. The preparation method according to any one of claims 1 to 5, wherein in step (3), a mass concentration of the microgel particle dispersion is 3 to 15%.

7. The preparation method according to any one of claims 1 to 6, wherein in step (4), the inlet temperature of the spray drying is 135 to 225°C, the injection amount is 4 to 50 ml/min, and the fan delivery is 25 to 35 m 3 /h.

8. The preparation method according to claim 1, wherein the preparation method comprises the following steps:
(1) mixing peanut protein isolate with water, stirring at room temperature at 200 to 1,250 rpm for 0.5 to 4 h, and hydrating at 3 to 5°C for 1 to 18 h to obtain peanut protein isolate dispersion with a mass concentration of 5 to 30%;
(2) adjusting pH value of the peanut protein isolate dispersion to 6.3 to 8.1, performing ultrasonic treatment at 100 to 500 W for 10 to 40 min, adding transglutaminase, and performing cross-linking reaction at 40 to 65°C for 1 to 4 h to obtain a monolithic gel;
(3) shearing the monolithic gel at 6,000 to 12,000 rpm for 30 to 120 s to obtain a crude microgel particle dispersion; adding a protective agent into the crude microgel particle dispersion, and homogenizing at 500 to 1,200 bar for 2 to 5 min to obtain a microgel particle dispersion;
the protective agent is selected from one or more of maltodextrin, lactose and mannitol; and
(4) spray drying the microgel particle dispersion to obtain the Pickering particle dry powder.

## Patentansprüche

1. Herstellungsverfahren für ein Trockenpulver mit Pickeringpartikeln, umfassend die folgenden Schritte:
(1) Rühren eines Erdnussproteinisolats und Wasser als Rohmaterialien, um eine Dispersion von Erdnussproteinisolat zu erhalten;
(2) Unterziehen der Dispersion von Erdnussproteinisolat einer Ultraschallbehandlung, wobei der pH-Wert der Dispersion von Erdnussproteinisolat im Voraus vor der Ultraschallbehandlung der Dispersion von Erdnussproteinisolat auf 6,3 bis 8,1 eingestellt wird und die Ultraschallbehandlung bei 100 bis 500 W während 10 bis 40 Minuten ausgeführt wird und das Reaktionsprodukt dann einer Vernetzungsreaktion mit Transglutaminase unterzogen wird, um ein monolithisches Gel zu erhalten;
(3) Scheren und Homogenisieren des monolithischen Gels, um eine Mikrogelpartikeldispersion zu erhalten; und
(4) Sprühtrocknen der Mikrogelpartikeldispersion, um das Trockenpulver mit Pickeringpartikeln zu erhalten.

2. Herstellungsverfahren nach Anspruch 1, wobei in Schritt (1) eine Massenkonzentration der Dispersion von Erdnussproteinisolat 5 % bis 30 % beträgt; und/oder das Rühren bei 200 bis 1.250 U/Min während 0,5 bis 4 h ausgeführt wird; und nach dem Rühren, ferner umfassend einen Hydratisierungsreaktionsschritt, die Hydratisierungsreaktion bei 3 bis 5 °C während 0 bis 18 h durchgeführt wird.

3. Herstellungsverfahren nach einem der Ansprüche 1 bis 2, wobei in Schritt (2) die Zugabemenge von Transglutaminase 10 bis 50 U/g, basierend auf der Masse des Erdnussproteinisolats, beträgt; und die Vernetzungsreaktion bei 40 bis 65 °C während 1 bis 4 h durchgeführt wird.

4. Herstellungsverfahren nach einem der Ansprüche 1 bis 3, wobei in Schritt (3) das Scheren bei 6.000 bis 12.000 U/Min während 30 bis 120 s durchgeführt wird und das Homogenisieren bei 500 bis 1.200 bar während 2 bis 5 Min. durchgeführt wird.

5. Herstellungsverfahren nach einem der Ansprüche 1 bis 4, wobei in Schritt (3) die Homogenisierung unter Einwirkung eines Schutzmittels durchgeführt wird; insbesondere das Schutzmittel in eine rohe Mikrogelpartikeldispersion zugegeben wird, die durch Scheren erhalten wurde, und das Reaktionsprodukt dann homogenisiert wird;
vorzugsweise das Schutzmittel aus einem oder mehreren von Maltodextrin, Lactose und Mannitol ausgewählt wird;
mehr bevorzugt die Zugabemenge des Schutzmittels 0,5 bis 10 %, basierend auf der Masse des Erdnussproteinisolats, beträgt.

6. Herstellungsverfahren nach einem der Ansprüche 1 bis 5, wobei in Schritt (3) eine Massenkonzentration der Mikrogelpartikeldispersion 3 bis 15 % beträgt.

7. Herstellungsverfahren nach einem der Ansprüche 1 bis 6, wobei in Schritt (4) die Einlasstemperatur des Sprühtrocknens 135 bis 225 °C beträgt, die Injektionsmenge 4 bis 50 ml/Min beträgt und die geförderte Luftmenge 25 bis 35 m³/h beträgt.

8. Herstellungsverfahren nach Anspruch 1, wobei das Herstellungsverfahren die folgenden Schritte umfasst:
(1) Mischen eines Erdnussproteinisolats mit Wasser, Rühren bei Raumtemperatur bei 200 bis 1.250 U/Min während 0,5 bis 4 h und Hydratisieren bei 3 bis 5 °C während 1 bis 18 h, um eine Dispersion von Erdnussproteinisolat mit einer Massenkonzentration von 5 bis 30 % zu erhalten;
(2) Einstellen des pH-Wertes der Dispersion von Erdnussproteinisolat auf 6,3 bis 8,1, Durchführen einer Ultraschallbehandlung bei 100 bis 500 W während 10 bis 40 Min, Hinzufügen von Transglutaminase und Durchführen einer Vernetzungsreaktion bei 40 bis 65 °C während 1 bis 4 h, um ein monolithisches Gel zu erhalten;
(3) Scheren des monolithischen Gels bei 6.000 bis 12.000 U/Min während 30 bis 120 s, um eine rohe Mikrogelpartikeldispersion zu erhalten; Hinzufügen eines Schutzmittels zu der rohen Mikrogelpartikeldispersion und Homogenisieren bei 500 bis 1.200 Bar während 2 bis 5 Min, um eine Mikrogelpartikeldispersion zu erhalten;
das Schutzmittel wird aus einem oder mehreren von Maltodextrin, Lactose und Mannitol ausgewählt; und
(4) Sprühtrocknen der Mikrogelpartikeldispersion, um das Trockenpulver mit Pickeringpartikeln zu erhalten.

## Revendications

1. Procédé de préparation d'une poudre sèche de particules de Pickering, comprenant les étapes suivantes :
(1) agitation d'isolat de protéines d'arachide et d'eau comme matières premières pour obtenir une dispersion d'isolat de protéines d'arachide ;
(2) soumission de la dispersion d'isolat de protéines d'arachide à un traitement par ultrasons, dans lequel la valeur pH de la dispersion d'isolat de protéines d'arachide est ajustée à 6,3 à 8,1 préalablement au traitement par ultrasons de la dispersion d'isolat de protéines d'arachide ; et le traitement par ultrasons est effectué à 100 à 500 watts pendant 10 à 40 minutes, puis soumission du produit obtenu à une réaction de réticulation avec la transglutaminase pour obtenir un gel monolithique ;
(3) cisaillement et homogénéisation du gel monolithique pour obtenir une dispersion de particules de microgel ; et
(4) séchage par pulvérisation de la dispersion de particules de microgel pour obtenir la poudre sèche de particules de Pickering.

2. Procédé de préparation selon la revendication 1, dans lequel, à l'étape (1), une concentration massique de la dispersion d'isolat de protéines d'arachide est de 5% à 30% ; et/ou l'agitation est effectuée à 200 à 1 250 tours/minute pendant 0,5 à 4 heures ; et après l'agitation, comprenant en outre une étape de réaction d'hydratation ; la réaction d'hydratation est effectuée à 3 à 5 °C pendant 0 à 18 heure(s).

3. Procédé de préparation selon l'une quelconque des revendications 1 à 2, dans lequel, à l'étape (2), la quantité de transglutaminase ajoutée est de 10 à 50 U/g sur la base de la masse de l'isolat de protéines d'arachide ; et la réaction de réticulation est effectuée à 40 à 65°C pendant 1 à 4 heure(s).

4. Procédé de préparation selon l'une quelconque des revendications 1 à 3, dans lequel, à l'étape (3), le cisaillement est effectué à 6 000 à 12 000 tours/minute pendant 30 à 120 secondes ; et l'homogénéisation est effectuée à 500 à 1 200 bars pendant 2 à 5 minutes.

5. Procédé de préparation selon l'une quelconque des revendications 1 à 4, dans lequel, à l'étape (3), l'homogénéisation est effectuée sous l'action d'un agent protecteur ; spécifiquement, l'agent protecteur est ajouté à une dispersion brute de particules de microgel obtenue par cisaillement, ensuite le produit obtenu est homogénéisé ;
de préférence, l'agent protecteur est choisi parmi un ou plusieurs de la maltodextrine, du lactose et du mannitol ;
de façon particulièrement préférée, la quantité d'agent protecteur ajoutée est de 0,5 à 10% sur la base de la masse de l'isolat de protéines d'arachide.

6. Procédé de préparation selon l'une quelconque des revendications 1 à 5, dans lequel, à l'étape (3), une concentration massique de la dispersion de particules de microgel est de 3 à 15%.

7. Procédé de préparation selon l'une quelconque des revendications 1 à 6, dans lequel, à l'étape (4), la température d'entrée du séchage par pulvérisation est de 135 à 225°C, la quantité injectée est de 4 à 50 ml/min, et le débit du ventilateur est de 25 à 35 m 3 /h.

8. Procédé de préparation selon la revendication 1, dans lequel le procédé de préparation comprend les étapes suivantes :
(1) mélange de l'isolat de protéines d'arachide avec de l'eau, agitation à température ambiante à 200 à 1 250 tours/minute pendant 0,5 à 4 heure(s), et hydratation à 3 à 5°C pendant 1 à 18 heure(s) pour obtenir une dispersion d'isolat de protéines d'arachide avec une concentration massique de 5 à 30% ;
(2) ajustement de la valeur pH de la dispersion d'isolat de protéines d'arachide à 6,3 à 8,1, réalisation d'un traitement par ultrasons à 100 à 500 watts pendant 10 à 40 minutes, ajout de la transglutaminase et réalisation d'une réaction de réticulation à 40 à 65°C pendant 1 à 4 heure(s) pour obtenir un gel monolithique ;
(3) cisaillement du gel monolithique à 6 000 à 12 000 tours/minute pendant 30 à 120 secondes pour obtenir une dispersion brute de particules de microgel ; ajout d'un agent protecteur à la dispersion brute de particules de microgel et homogénéisation à 500 à 1 200 bars pendant 2 à 5 minutes pour obtenir une dispersion de particules de microgel ;
l'agent protecteur est choisi parmi un ou plusieurs de la maltodextrine, du lactose et du mannitol, et
(4) séchage par pulvérisation de la dispersion de particules de microgel pour obtenir la poudre sèche de particules de Pickering.
